Europäisches Patentamt

European Patent Office

Office européen des brevets

(11) Publication number: **0 160 366**
**A1**

(12) **EUROPEAN PATENT APPLICATION**

(21) Application number: **85301619.4**

(22) Date of filing: **08.03.85**

(51) Int. Cl.⁴: **F 03 B 13/04**
**F 03 B 3/02**

(30) Priority: **12.03.84 GB 8406428**

(43) Date of publication of application:
**06.11.85 Bulletin 85/45**

(84) Designated Contracting States:
**BE FR GB IT NL SE**

(71) Applicant: **Pennongrade Limited**
**P.O Box 71**
**Slough Berkshire(GB)**

(72) Inventor: **Isaac, Ronald Frederick**
**c/o Pennongrade Limited P.O. Box 71**
**Slough Berkshire(GB)**

(74) Representative: **Goldsmith, Barry Sanders et al,**
**Marks & Clerk 57/60 Lincoln's Inn Fields**
**London WC2A 3LS(GB)**

(54) **Hydraulic turbines.**

(57) A hydraulic turbine for use underwater which includes an impellar (2) mounted for rotation in a casing (1) and having an axial outlet (4), the impeller (2) being surrounded by a ring of equally-spaced injectors (7) for directing water under pressure from a circumferential outer chamber (5) onto the impeller (2) at an angle inclined with respect to the impeller radius to the injector (7), wherein the impeller (2) has equally spaced blades (10) which are shaped such that they always receive water directed onto them at an angle of about 90° with respect to the tangent to the blade surface at the point of impact. Each injector (7) may have a downstream wall (8) inclined at an angle of 45° with respect to the impeller radius to the injector (7). There may be more blades (10) than injectors (7), the number being chosen so that the blades (10) pass the injectors (7) at different times.

EP 0 160 366 A1

M&C FOLIO: 799P47726                    WANGDOC: 0313s

Title:- <u>HYDRAULIC TURBINES</u>

This invention relates to hydraulic turbines of the type
intended for use underwater and arranged to be driven by
water supplied to it under pressure, the turbine having
an impeller upon an output shaft to which may be
connected a tool, such as a cleaning brush.

It is an object of the present invention to provide an
improved hydraulic turbine which is efficient in use and
operates with the minimum vibration.

The present invention consists in a hydraulic turbine
which includes an impellar mounted for rotation in a
casing and having an axial outlet, the impeller being
surrounded by a ring of injectors for directing water
under pressure from a circumferential outer chamber onto
the impeller at an angle inclined with respect to the
impeller radius to the injector, wherein the impeller
has blades which are shaped such that they always
receive water directed to them at an angle of about 90°
with respect to the tangent to the blade surface at the
point of impact.  Each injector may have a downstream
wall inclined at an angle of 45° with respect to the
impeller radius to the injector.

The injectors may be equally spaced and the impeller may have equally spaced blades with more blades than injectors, the number being chosen so that the blades pass the injectors at different times. The number of blades may exceed the number of injectors by one.

In the accompanying drawings :-

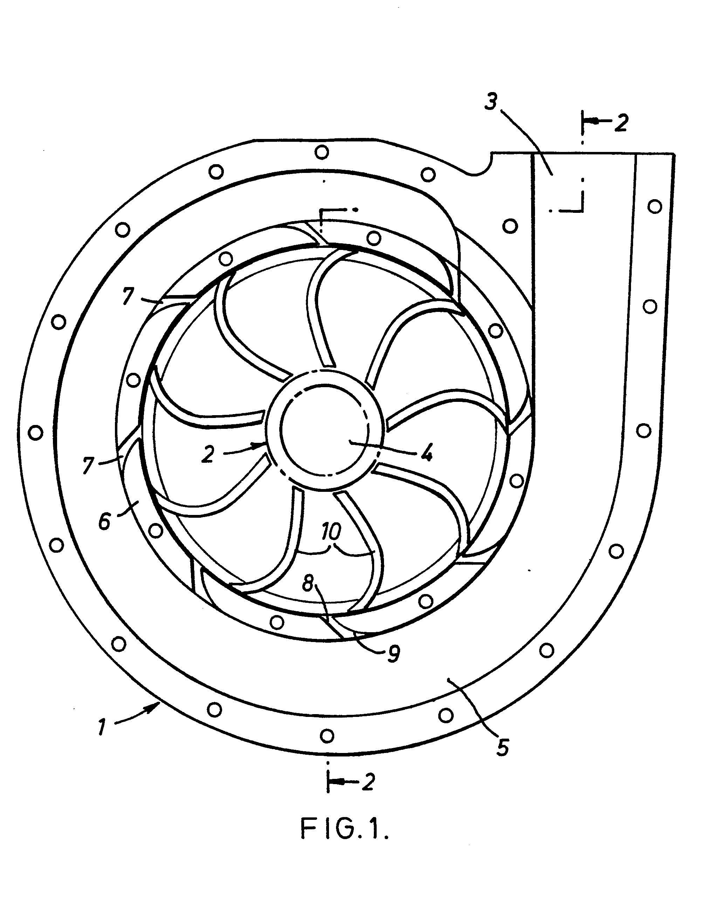

Figure 1 shows one form of hydraulic turbine, according to the present invention, with part of its casing removed, and

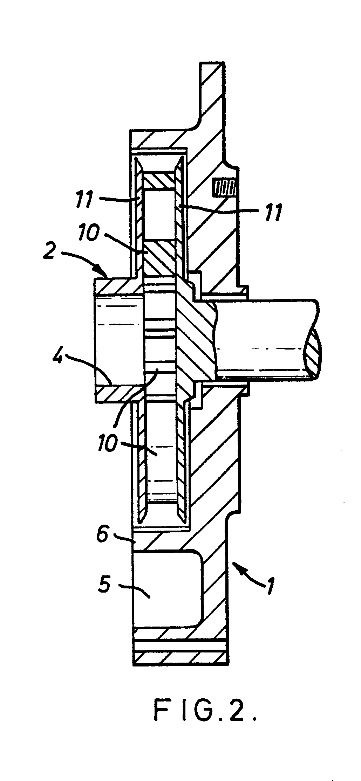

Figure 2 is a section taken on line 2-2 of Figure 1.

In carrying the invention into effect according to one convenient mode by way of example, a hydraulic turbine includes a casing 1 in which an impeller 2 is mounted for rotation.

The casing 1 has a tangential inlet 3 to receive a supply of water under pressure and an axial outlet 4 through which the water leaves after passing through the impeller 2.

The casing 1 includes a circumferentially extending chamber 5 formed between the casing and an internal circular wall 6 having eight equally spaced slots 7 forming injectors through which the water passes to reach the impeller 2. Each injector 7 is inclined at an angle with respect to the impeller radius to the injector and has a downstream wall 8 inclined at an angle of 45° to the radius, the outer wall 9 being curved to facilitate the flow of water through the injector. The impeller carries nine equally spaced curved blades 10 mounted between flanges 11, the shape of the blades being chosen so that as the impeller rotates under the effect of the water leaving the injector, the water always impinges upon the blade at about 90° to the tangent to the blade surface.

In one embodiment, it was found that with the wall 8 inclined at an angle of $45°$, the average direction of the water leaving the injector was inclined at an angle of about $40°$ to the radius to the injector, and the blade shape was designed accordingly to achieve the impact at about $90°$. However, other combinations of wall angle and blade form may be employed.

Since there are nine blades and eight injectors, each blade will receive water from a given injector for about 40° of its travel past that injector and the instants at which the blades start to receive water and cease to receive water will be different for each blade thereby smoothing out possible fluctuations in the torque imparted to the impeller. Other combinations of the number of injectors and the number of blades are possible. For example there may be six injectors with seven blades or twelve injectors with thirteen blades, the combination being so chosen that the blades pass the injectors at different times.

The blades are extended inwardly past the point where they cease to receive water from any injector so that the area of the blade surface can be made equal to or greater than the area of the outlet 4 to avoid creation of a back pressure.

CLAIMS:-

1.  A hydraulic turbine which includes an impellar (2) mounted for rotation in a casing (1) and having an axial outlet (4), the impeller (2) being surrounded by a ring of injectors (7) for directing water under pressure from a circumferential outer chamber (5) onto the impeller (2) at an angle inclined with respect to the impeller radius to the injector (7), wherein the impeller (2) has blades (10) which are shaped such that they always receive water directed onto them at an angle of about 90° with respect to the tangent to the blade surface at the point of impact.

2.  A turbine as claimed in claim 1 wherein each injector has a downstream wall inclined at an angle of 45° with respect to the impeller radius to the injector.

3.  A turbine as claimed in claim 1 or 2, wherein the injectors are equally spaced and the impeller has equally spaced blades with more blades than injectors, the numbers being chosen so that the blades pass the injectors at different times.

4.  A turbine as claimed in claim 3, wherein the number of blades exceeds the number of injectors by one.

5.  A turbine as claimed in claim 4, wherein there are nine blades and eight injectors.

6.  A turbine as claimed in any one of claims 1 to 5, wherein the area of the blade surface is equal to or greater than the area of the outlet.

FIG.1.

FIG.2.

**European Patent Office**

## EUROPEAN SEARCH REPORT

Application number

EP 85 30 1619

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | FR-A-2 483 531 (FLANDIN BLETY) <br> * Page 1, line 27 - page 2, line 15 * | 1,2 | F 03 B 13/04 <br> F 03 B 3/02 |
| A | FR-A- 419 399 (HUHN) <br> * Page 1, lines 48-60 * | 3 | |
| X | FR-A-2 370 874 (FLANDIN BLETY) <br> * Page 2; figure 1 * | 1,2 | |
| A | GB-A- 252 424 (I. BURN) | 3 | |
| | ----- | | |
| | | | TECHNICAL FIELDS SEARCHED (Int. Cl.4) |
| | | | F 03 B |

The present search report has been drawn up for all claims

| Place of search | Date of completion of the search | Examiner |
|---|---|---|
| THE HAGUE | 18-06-1985 | DE WINTER P.E.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document